Europäisches Patentamt

European Patent Office

Office européen des brevets

(19)

(11) **EP 1 672 816 A2**

(12) **EUROPEAN PATENT APPLICATION**

(43) Date of publication:
**21.06.2006 Bulletin 2006/25**

(51) Int Cl.:
*H04B 7/005* (2006.01)

(21) Application number: **05026499.3**

(22) Date of filing: **05.12.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **15.12.2004 JP 2004362133**

(71) Applicant: **NEC Corporation
Minato-ku
Tokyo (JP)**

(72) Inventor: **Itou, Han,
NEC Corporation
Minato-ku
Tokyo (JP)**

(74) Representative: **von Samson-Himmelstjerna,
Friedrich et al
SAMSON & PARTNER,
Widenmayerstrasse 5
D-80538 München (DE)**

(54) **Radio communication apparatus, transmission power control method and transmission power control program**

(57) To provide a radio communication apparatus that can make the transmitter power control at higher precision.

A TPC bit generation part generates the TPC bits by variably controlling the transmitter power control width in accordance with a difference between M-SIR measured based on a received signal and its target value T-SIR. A TPC_slope control part variably controls TPC_slope that is a factor used when the TPC bit generation part variably controls the transmitter power control width in accordance with a difference between M-BLER of the received signal and its target value T-BLER.

# FIG. 1

**Description**

BACKGROUND OF THE INVENTION

Field of the Invention

The present invention relates to a radio communication apparatus, a method of controlling the transmitter power, and a program, and more particularly to a radio communication apparatus for generating the transmitter power control information based on a received signal from the other station and transmitting it to the other station.

Related Art

A mobile communications system that uses a code division multiple access method (CDMA method) is a multiple communication method using the cross correlation value between the spreading codes allocated to mobile stations being zero by allocating the spreading code to each mobile station. However, the cross correlation between spreading codes can not be actually made zero, whereby a transmission signal of a certain mobile station becomes interference with the transmission signal of another mobile station. Therefore, there is a problem generally called a near-far problem in which the signal transmitted from the relatively remote mobile station to a base station is buried in the signal transmitted from the relatively near mobile station to the base station.

To solve this near-far problem, it is considered that the transmitter power for transmission between the base station and the relatively remote mobile station is increased, but another problem arises that the amount of interference to other mobile stations is increased due to more transmitter power, decreasing the communication capacity. Accordingly, on the premise that the communication quality is not degraded, it is necessary to suppress the transmitter power of the base station, and decrease the influence given to other mobile stations. Also, there is another effect that the interference between the mobile stations is suppressed and the communication capacity is increased by suppressing the transmitter power of the base station.

On the other hand, in the radio communication, there is a phenomenon, which is called a fading, that the propagation environment is greatly varied due to movement of the mobile station and reflection of the electric wave against buildings, and the reception power is abruptly varied in both the up-link and the down-link. The communication quality is greatly deteriorated by fading. For instance, if the transmitter power of the base station is controlled to be lowered unrestrictedly, while the communication quality changes greatly by fading, the communication quality is further deteriorated, whereby the transmitter power of the base station can not be unrestrictedly lowered. Therefore, it is required that the transmitter power control in the CDMA method maintains the communication quality of the down-link, while suppressing the transmitter power of the base station, in consideration of the influence of fading. Thus, with the conventional method of controlling the transmitter power, taking a receiver of the mobile station as an example, a standard quality is provided for the communicating service, and the transmitter power of the base station is controlled at high speed so that the communication quality of the down-link may follow the standard quality.

In the following, the method of controlling the transmitter power in the mobile communications system employing the CDMA method will be described in detail, taking the transmitter power control of the down-link as an example.

The method of controlling the transmitter power at the mobile station in the mobile communications system employing the CDMA method controls the transmitter power of the down-link by using the control method called the closed loop transmitter power control method. The closed loop transmitter power control method is the power control method in which the transmitter power of the base station is controlled so that the reception quality of the communication channel in communication at the mobile station may satisfy the preset reception quality as desired. This transmitter power control is performed by transmitting the transmitter power control bits (TPC bits) for controlling the transmitter power of the base station via a physical channel of the up-link from the mobile station to the base station.

Next, the closed loop transmitter power control method will be described in detail in connection with the generation of the TPC bits within the mobile station and the method of controlling the transmitter power at the base station based on the TPC bits. The closed loop transmitter power control method is achieved by the inner loop power control based on a ratio of reception power of received desired signal to reception power of received interference signal (M-SIR: Measured-Signal to Interference Ratio) and the outer loop power control based on the reception quality (M-BLER: Measured-Block Error Rate) of the received signal.

Firstly, the mobile station measures the M-BLER of received signal over a relatively long period, and compares it with a target quality (T-BLER: Target-BLER). Base on the result of comparison, the mobile station increases or decreases a target value of SIR (T-SIR: Target-SIR) as a basis of the inner loop power control by a predetermined value.

In the inner loop power control, T-SIR and M-SIR are compared, and the TPC bits are generated so that M-SIR may follow T-SIR. Specifically, the mobile station generates a TPC_command (TPC command) that is represented only by two values of "0" ("DOWN") and "1" ("UP") in accordance with the formula (1).

$$TPC\_cmd = \begin{cases} 1 \ (UP) & \text{if Target - SIR > Measurement - SIR} \\ 0 \ (DOWN) & \text{if Target - SIR < Measurement - SIR} \end{cases} \quad \ldots (1)$$

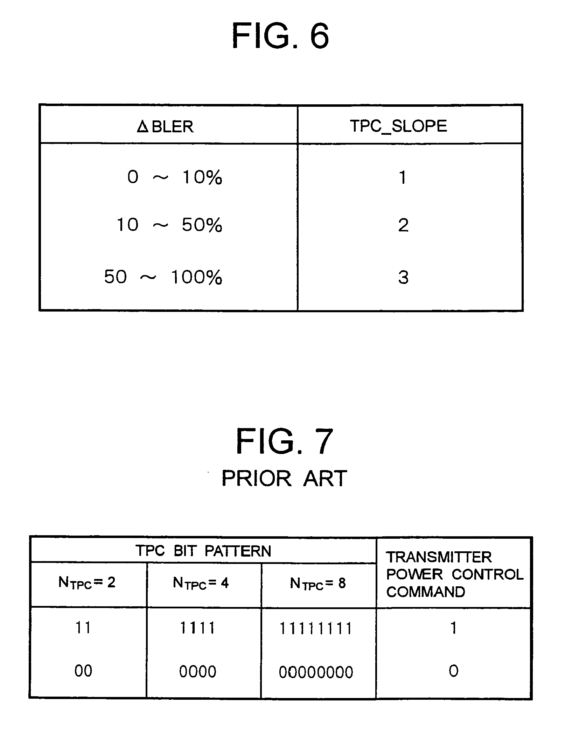

That is, the TPC bits are generated as the "UP" command if the M-SIR of the signal received by the mobile station is smaller than the T-SIR, and generated as the "DOWN" command if the M-SIR of the received signal is greater than the T-SIR. FIG. 7 is a view showing the conventional correspondence relation between the TPC bit pattern and the TPC command, where N is the number of bits in the TPC bit pattern.

The generated TPC bits are transmitted to the base station via the physical channel of the up-link. The base station controls the transmitter power, based on the TPC bits transmitted from the mobile station. Specifically, the base station obtains a TPC command from the received TPC bits based on the correspondence relation of FIG. 7. If the received TPC bits indicate "UP", the transmitter power of the down-link signal is increased by ΔTPC (fixed value (transmitter power adjustment width) designated by the upper-level layer of the base station), or if the received TPC bits indicate "DOWN", the transmitter power of the down-link signal is decreased by ΔTPC.

With the conventional closed loop transmitter power control method as described above, the transmitter power adjustment value of the base station based on the received TPC bits is fixed. Therefore, when an abrupt change occurs in the propagation environment of the down-link, the transmitter power control of the base station can not follow the change in the propagation environment, so that the communication quality of the down-link is abruptly deteriorated not to satisfy the preset desiredquality. The transmitter power adjustment width of the base station may be made a large value in advance to cope with the abrupt change in the propagation environment, but when the change in the propagation environment is gentle, the transmitter power of the base station is controlled to be more excessive than the change in the propagation environment, resulting in a problem of causing interference between the mobile stations as described above, and causing a decrease in the communication capacity because the involvement of interference between the mobile stations leads to requesting the excessive down-link transmitter power.

On the other hand, there is described in Japanese Patent Laid-OpenNo. 2001-223637 a radio communication apparatus having a transmitter power control function of controlling the transmitter power of the apparatus, employing the TPC bits transmitted from the other station to the apparatus in which the transmitter power adjustment width corresponding to the TPC bits is changed based on a variation amount of the reception power. In this way, in the radio communication apparatus of Japanese Patent Laid-Open No. 2001-223637, because the transmitter power adjustment width is variable, an abrupt change in the propagation environment can be followed, and when the change in the propagation environment is gentle, the transmitter power of the base station is controlled less sensitively, so that the accuracy of the transmitter power control is improved.

The transmitter power adjustment width when there is a large difference between the received signal quality (M-BLER) and the target quality (T-BLER) used for the outer loop power control is desirably greater than when the difference is small. That is, the transmitter power adjustment width when the difference between M-BLER and T-BLER is large and the transmitter power adjustment width when the difference is small have desirably different values even if a variation amount of the reception power when the difference is large is equal to the variation amount when the difference is small.

However, in the radio communication apparatus as described in Japanese Patent Laid-Open No. 2001-223637, because the transmitter power adjustment width is decided based on the variation amount of reception power, the transmitter power adjustment widths in the above two cases are equal, but can not be different.

BRIEF SUMMARY OF THE INVENTION

An object of the present invention is to provide a radio communication apparatus, a transmitter power control method and a program that can perform the transmitter power control at higher precision.

The present invention provides a radio communication apparatus for generating the transmitter power control information based on a received signal from the other station and transmitting the transmitter power control information to the other station, comprising transmitter power control information generation means for generating the transmitter power control information by varying a transmitter power adjustment width of transmitter power at the other station in accordance with a difference between the receiving environment of the apparatus measured based on the received signal and its target value, and factor control means for variably controlling a factor, which is used when the transmitter power control, information generation means variably controls the transmitter power adjustment width in accordance with the difference between the receiving environment and its target value, in accordance with a difference between the received signal quality and its target value.

The radio communication apparatus may further comprise target value control means for variably controlling the adjustment width in the target value of the receiving environment in accordance with the difference between the received signal quality and its target value to change the target value of the receiving environment by the adjustment width.

Also, the invention provides a transmitter power control method for a radio communication apparatus for generating the transmitter power control information based on a received signal from the other station and transmitting the transmitter power control information to the other station, comprising a transmitter power control information generation step of generating the transmitter power control information by varying a transmitter power adjustment width of transmitter power at the other station in accordance with a difference between the receiving environment of the apparatus measured based on the received signal and its target value, and a factor control step of variably controlling a factor, which is used at the transmitter power control information generation step in variably controlling the transmitter power adjustment width in accordance with the difference between the receiving environment and its target value, in accordance with a difference between the received signal quality and its target value.

The transmitter power control method may further comprise a target value control step of variably controlling the adjustment width in the target value of the receiving environment in accordance with the difference between the received signal quality and its target value to change the target value of the receiving environment by the adjustment width.

Also, the invention provides a program for enabling a computer to perform a transmitter power control method for a radio communication apparatus for generating the transmitter power control information based on a received signal from the other station and transmitting the transmitter power control information to the other station, comprising a transmitter power control information generation step of generating the transmitter power control information by varying a transmitter power adjustment width of transmitter power at the other station in accordance with a difference between the receiving environment of the apparatus measured based on the received signal and its target value, and a factor control step of variably controlling a factor, which is used at the transmitter power control information generation step in variably controlling the transmitter power adjustment width in accordance with the difference between the receiving environment and its target value, in accordance with a difference between the received signal quality and its target value.

In this way, in the invention, transmitter power control information generation means of the radio communication apparatus variably controls the transmitter power adjustment width in accordance with a difference ($\Delta$ receiving environment) between the receiving environment of the apparatus measured based on the received signal from the other station and its target value, and factor control means variably controls the factor, which is used when the transmitter power control information generation means variably controls the transmitter power adjustment width, in accordance with a difference ($\Delta$ received signal quality) between the received signal quality and its target value. Accordingly, even if the $\Delta$ receiving environment is equivalent when the $\Delta$ received signal quality is large and when it is small, the transmitter power adjustment width when the $\Delta$ received signal quality is large can be larger than the transmitter power adjustment width when the $\Delta$ received signal quality is small, whereby the transmitter power control is made at higher precision.

The receiving environment is SIR or received signal power and the received signal quality is BLER or BER.

BRIEF DESCRIPTION OF THE DRAWINGS

FIG. 1 is a view showing a mobile communication system according to a first embodiment of the present invention;
FIG. 2 is a diagram showing the configuration of a mobile station in FIG. 1;
FIG. 3 is a flowchart showing the operation of the mobile station in FIG. 1;
FIG. 4 is a view showing one example of the correspondence relation between TPC bit pattern and TPC command according to the first embodiment of the invention;
FIG. 5 is a view showing another example of the correspondence relation between TPC bit pattern and TPC command according to the first embodiment of the invention;
FIG. 6 is a view showing one example of the correspondence relation between $\Delta$BLER and TPC_slope according to the first embodiment of the invention; and
FIG. 7 is a view showing the conventional correspondence relation between TPC bit pattern and TPC command.

DETAILED DESCRIPTION OF THE PREFERRED EMBODIMENTS

A first embodiment of the present invention will be described below with reference to the drawings.

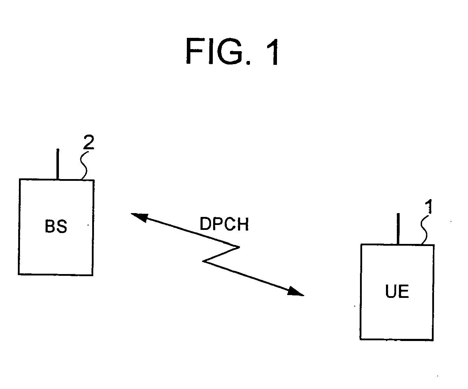

FIG. 1 is a view showing a mobile communication system according to a first embodiment of the invention. In FIG. 1, the mobile communication system according to the first embodiment of the invention employs a CDMA method, and has a mobile station (UE) 1, and a base station (BS) 2. In the mobile communication system employing the CDMA method, it is chiefly a DPCH (Dedicated Physical Channel) that controls the transmitter power of the mobile station or base station employing a closed loop transmitter power control method.

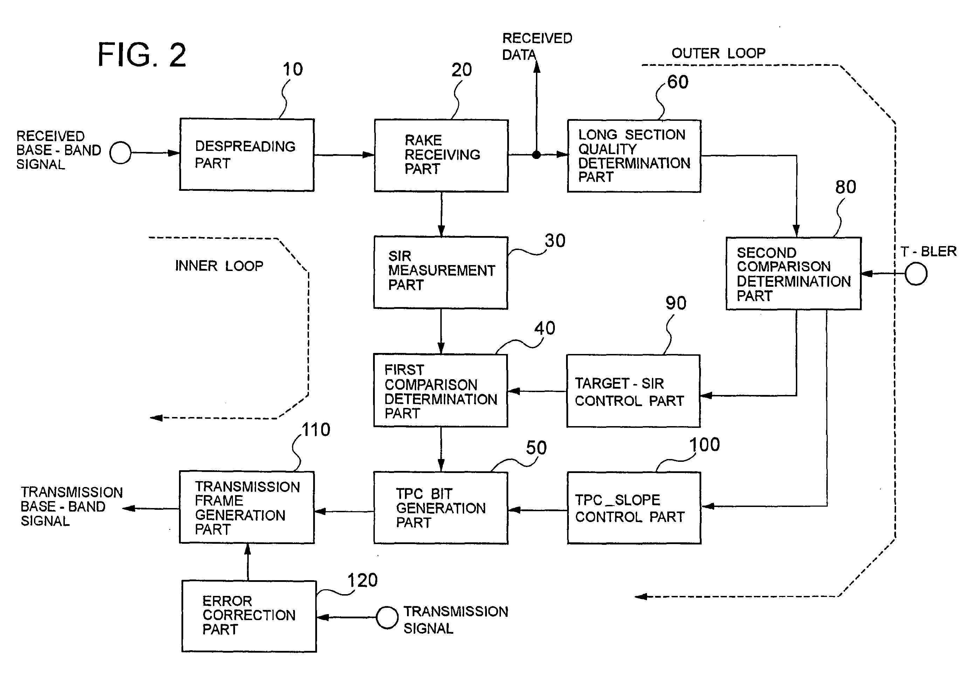

FIG. 2 is a diagram showing the configuration of the mobile station 1 in the mobile communication system according to the first embodiment of the invention. The configuration for implementing the closed loop transmitter power control method according to the first embodiment of the invention is roughly divided into an inner loop power control part and an outer loop power control part.

As shown in FIG. 2, the inner loop power control part comprises a despreading part 10 for spreading and demodulating a received signal using the spreading code, a Rake receiving part 20 for making rake combining of the received signal including a multi-path component, an SIR measurement part 30 for computing an M-SIR from the received signal, a first comparison determination part 40 for comparing an M-SIR and a T-SIR, and a TPC bit generation part 50 for generating the TPC bits for controlling the transmitter power of the base station 2.

The outer loop power control part comprises a long section quality determination part 60 for measuring the M-BLER of the received signal, a second comparison determination part 80 for comparing the M-BLER and the T-BLER, a Target-SIR control part 90 for controlling the T-SIR based on the result of comparison between M-BLER and T-BLER, and a TPC_slope control part 100 for controlling the TPC_slope that is one of the parameters used to control the TPC bit pattern based on the result of comparison between M-BLER and T-BLER. The mobile station 1 further comprises a transmission frame generation part 110 for generating a transmission frame for use in a transmission section by inserting the TPC bits into the transmission signal, and an error correction part 120 for making an error correction process performed at the base station 2.

The signal received by the mobile station 1 is subjected to a radio signal processing, and then inputted as a received base-band signal into the despreading part 10. The received signal is subjected to the despreading process and the Rake receiving process in the despreading part 10 and the Rake receiving part 20, reported to an upper-level layer, not shown, as the received data, and inputted into the long section quality determination part 60 and the SIR measurement part 30. The M-BLER of the received signal is measured in the long section quality determination part 60, and the M-SIR of the received signal is measured in the SIR measurement part 30.

The M-BLER measured in the long section quality determination part 60 is compared with the T-BLER by the second comparison determination part 80, the result of comparison being inputted into the Target-SIR control part 90 and the TPC_slope control part 100. The Target-SIR control part 90 increases or decreases the T-SIR by a predetermined value, based on the result of comparison between M-BLER and T-BLER. The TPC_slope control part 100 checks the presence or absence of an abrupt variation in the received signal quality, based on the result of comparison between M-BLER and T-BLER, and variably controls the TPC_slope that is one of the parameters for use to control the TPC bit pattern.

On the other hand, the M-SIR measured in the SIR measurement part 30 is compared with the T-SIR inputted from the Target-SIR control part 90 by the first comparison determination part 40, the result of comparison between M-SIR and T-SIR being inputted into the TPC bit generation part 50. The TPC bit generation part 50 generates the TPC bits for controlling the transmitter power of the base station 2, based on the result of comparison between M-SIR and T-SIR inputted from the first comparison determination part 40 and the TPC_slope information inputted from the TPC_slope control part 100, and outputs the TPC bits to the transmission frame generation part 110.

The transmission frame generation part 110 synthesizes the transmission signal inputted from the error correction part 120 with the TPC bits inputted from the TPC bit generation part 50 to generate a transmission frame and output it as a transmission base-band signal.

With the closed loop transmitter power control method according to the first embodiment of the invention, the transmitter power of the base station 2 in the down-link is controlled using the following formulas (2) and (3).

$$\text{TPC\_cmd} = \text{TPC\_slope} \times (\text{T-SIR} - \text{M-SIR}) \qquad \ldots (2)$$

$$\Delta\text{Power} = \Delta\text{TPC} \times \text{TPC\_cmd} \qquad \ldots (3)$$

The TPC bit generation part 50 generates the TPC_cmd(TPC command) by calculating the product of the difference ($\Delta$SIR) between T-SIR and M-SIR and the TPC_slope designated by the TPC_slope control part 100, as shown in formula (2). TPC_cmd has several kinds of control patterns depending on the gradient ($\Delta$SIR) at which M-SIR is changed.

Since the TPC_slope control part 100 variably controls TPC_slope in accordance with the difference ($\Delta$BLER) between T-BLER and M-BLER, the correspondence relation (TPC_slope) between TPC_cmd and $\Delta$SIR is changed depending on the variation ($\Delta$BLER) of the received signal quality.

On the other hand, the base station 2 controls the transmitter power of the self-station in accordance with the formula (3). In the formula (3), $\Delta$Power is a transmitter power adjustment width, $\Delta$TPC is a fixed value designated by the upper-level layer of the base station 2, and TPC_cmd is a TPC command indicated by TPC bits transmitted via the up-link from the mobile station 1. The base station 2 obtains the product ΔPower of ΔTPC and TPC_cmd, and increases or decreases the transmitter power of the self-station by ΔPower, as shown in the formula (3). Hence, when the propagation environment abruptly changes, the transmitter power of the base station 2 is controlled at high speed, or when it gently changes, the transmitter power of the base station 2 is controlled at low speed.

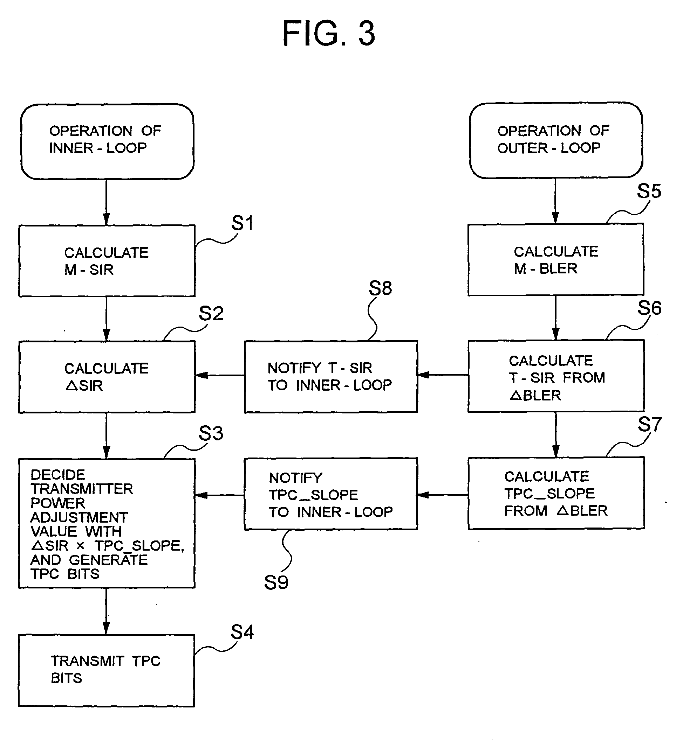

The operation of this embodiment will be described below in detail with reference to the drawings. FIG. 3 is a flowchart showing the operation of the mobile station 1 in FIG. 1.

In the transmitter power control of the down-link , the mobile station 1 generates the TPC bits in accordance with the formula (2) . Specifically, in the inner loop power control part as shown in FIG. 3, the SIR measurement part 30 measures M-SIR with the base-band signal subjected to the Rake receiving process (step S1). The first comparison determination part 40 computes a difference ΔSIR between the M-SIR and the T-SIR designated by the Target-SIR control part 90 of the outer loop power control part (step S2).

The TPC bit generation part 50 generates the TPC_cmd by calculating the product of ΔSIR and TPC_slope designated by the TPC_slope control part 100 of the outer loop power control part (see the formula (2)), and converts it into the TPC bits (step S3). Since the transmission frame generation part 110 generates the transmission frame including the TPC bits and outputs it as the transmission base-band signal, the TPC bits are transmitted via the up-link to the base station 2 (step S4).

The base station 2 deciphers the received TPC bits into TPC_cmd, and controls the transmitter power of the down-link by calculating the product of ΔTPC and TPC_cmd, using the formula (3).

For example, when M-SIR is lower by 0.5 dB than T-SIR, Δ SIR = 0.5 dB. At this time, if TPC_slope = 2, TPC_cmd = 0.5 dBX2 = 1. Also, when M-SIR is lower by 1.0 dB than T-SIR, Δ SIR = 1.0 dB, and TPC_cmd = 1.0 dBX 2 = 2. In this way, though in the conventional system, if M-SIR<T-SIR, TPC_cmd of "UP" is only generated, as shown in the formula (1), TPC_cmd having a variable width can be generated in accordance with a change extent (ΔSIR) of the propagation environment in this embodiment. That is, the transmitter power adjustment width of the transmitter power on the base station 2 can be varied in accordance with ΔSIR.

A method for converting TPC_cmd into the TPC bits in this embodiment will be described below. In a mobile communication system employing the CDMA method, some slot formats are prepared for DPCH to implement various transmission rates. In each slot format, the specification of the TPC bits is defined. Generally, as the spreading factor is smaller, the number of bits in the TPC bit string is increased.

As seen from the conventional correspondence relation between the TPC bit pattern and TPC_cmd in FIG. 7, when all the TPC bits are 1, TPC_cmd = 1, or when all the TPC bits are 0, TPC_cmd = 0. At the base station, when TPC_cmd = 1, the transmitter power of the base station is increased by ΔTPC, or when TPC_cmd = 0, the transmitter power of the base station is decreased by ΔTPC.

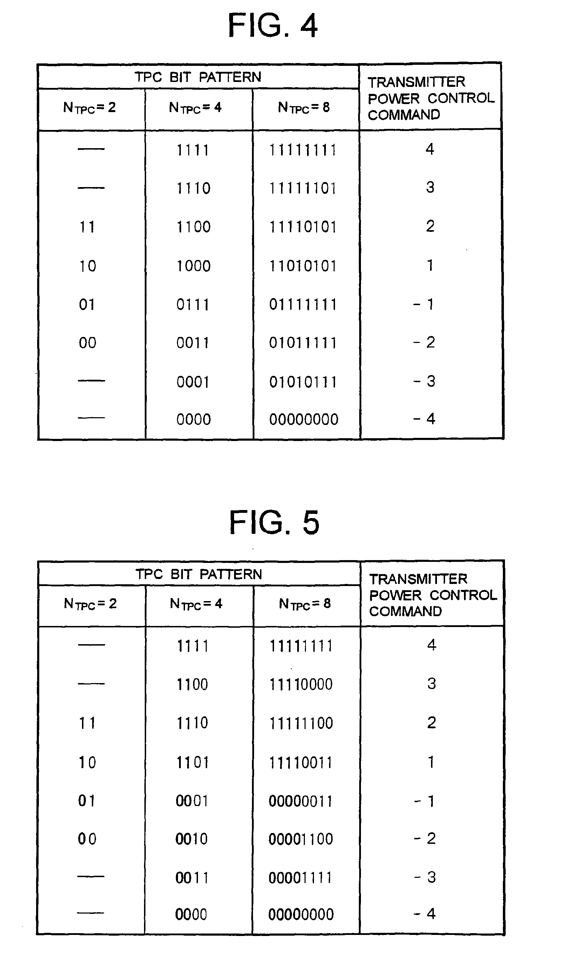

FIG. 4 shows an example of the correspondence relation between the TPC bit pattern and TPC_cmd in this embodiment. As shown in FIG. 4, if the number of bits in the TPC bit string is 4 or more, four patterns of TPC_cmd can be represented in each of the UP and DOWN directions (TPC_cmd in the UP direction is from 1 to 4, TPC_cmd in the DOWN direction is from -1 to -4). Accordingly, the transmitter power of the base station 2 can be controlled in a range of quadruple ΔTPC. When the number of bits in the TPC bit string is 2, but not 4 or 8, two patterns of TPC_cmd can be only represented in each of the UP direction and the DOWN direction, in which more kinds of TPC_cmd are represented than in the conventional system, making it possible to deal with abrupt environmental changes.

The correspondence relation of FIG. 4 is only illustrative. If the base station 2 and the mobile station 1 have the same correspondence relation, the base station 2 can decipher the TPC_cmd from the TPC bit string. Of course, the specification of FIG. 4 may be changed.

FIG. 5 is a view showing another example of the correspondence relation between TPC bit pattern and TPC_cmd according to this embodiment. In FIG. 5, the former half part of the TPC bit string represents "UP" or "DOWN" , consisting of "1" or "0". Also, the base station 2 knows the size of the transmitter power adjustment width from the latter half part of the TPC bit string.

If the base station 2 can not receive the former half part of the TPC bit string with "0" or "1" complete, it is considered that there is an error reception, whereby the "UP" is determined if the former half part of the TPC bit string has more bits of "1", or the "DOWN" is determined if the former half part of the TPC bit string has more bits of "0". Thereby, the effect of preventing the error determination is obtained. In this case, since there is the possibility that the latter half part of the TPC bit string has an error, the base station 2 may determine that the size of the transmitter power adjustment width is the minimum value (ΔTPC).

Since "UP" is safer than "DOWN", if the base station 2 can not receive the former half part of the TPC bit string with "0" or "1" complete, "UP" is judged unconditionally, whereby the base station 2 may increase the transmitter power by ΔTPC.

A part of the TPC bit pattern as shown in FIG. 4 or 5 may be employed as the conventional TPC bit pattern for controlling the transmitter power. For example, the TPC bit patterns in the first and eighth rows of FIG. 4 or 5 are associated with an "UP" command ("1") for instructing to simply increase the transmitter power by ΔTPC, as like a TPC command of FIG. 7, and a "DOWN" command ("0") for instructing to simply decrease the transmitter power by ΔTPC. Thereby, the conventional transmitter power control may be made.

Though the TPC bit generation method in the inner loop power control part of the mobile station 1 is mainly described above, the transmitter power control for the down-link appropriate to the external environment may be performed in conjunction with the outer loop power control part of the mobile station 1.

Specifically, the long section quality determination part 60 in the outer loop power control part measures the received signal quality (M-BLER) over the longer section than in the inner loop power control part (step S5), and the second comparison determination part 80 computes a difference (ΔBLER) between M-BLER and T-BLET, as shown in FIG. 3.

The Target-SIR control part 90 generates T-SIR, based on ΔBLER (step S6), and T-SIR is designated into in the inner loop power control part (step S8). That is, the T-SIR is inputted into the first comparison determination part 40. Also, the TPC_slope control part 100 changes TPC_slope in the formula (2), depending on ΔBLER (step S7), and TPC-slope is designated into in the inner loop power control part (step S9). That is, the TPC-slope is inputted into the TPC bit generation part 50.

FIG. 6 is a view showing one example of the correspondence relation between ΔBLER and TPC_slope according to this embodiment. The correspondence relation of FIG. 6 is only illustrative, but of course, the specification of FIG. 6 may be changed depending on each transmission rate and spreading factor.

For example, when TPC_slope = 2 and M-SIR is lower by 0.5 dB than T-SIR, TPC_cmd = 0.5 dBX2=1, whereby the transmitter power of the base station 2 is increased by 1XΔTPC. Also, when TPC_slope = 2 and M-SIR is lower by 1.0 dB than T-SIR, TPC_cmd = 1.0 dBX2 = 2, whereby the transmitter power of the base station 2 is increased by 2XΔTPC. Herein, it is assumed that because M-BLER is deteriorated more abruptly than T-BLER, the TPC_slope control part 100 sets TPC_slope = 4 in the inner loop power control part, in accordance with the ΔBLER. Then, when M-SIR is lower by 0.5 dB than T-SIR, TPC_cmd = 0.5 dBX4 = 2, whereby the transmitter power of the base station 2 is increased by 2× ΔTPC. Also, when M-SIR is lower by 1.0 dB than T-SIR, TPC_cmd =1.0 dBX4 = 4, whereby the transmitter power of the base station 2 is increased by 4XDTPC.

In the above, the description has been given mainly regarding that the transmitter power of the base station 2 is increased so that the communication quality may not be deteriorated when the propagation environment is abruptly worse. On the other hand, when M-BLER is significantly lower than T-BLER, and the communication quality is excessively excellent, it is necessary to decrease the transmitter power of the base station 2 to reduce the interference exerted to other users and increase the link capacity of the base station 2. In this case, of course, the transmitter power of the base station 2 may be controlled to be decreased by preparing the TPC bit patterns in the "DOWN" direction, as shown in FIG. 4.

In the first embodiment of the invention, a plurality of correspondence relations between ΔBLER and TPC_slope may be prepared, as shown in FIG. 6. For example, the correspondence relation may be prepared for each device type of the mobile station or each propagation environment. As to the propagation environment, because the communication quality is greatly varied in a street of big business buildings, it is desirable that TPC_slope is controlled to be greater value than in the environment of an open field where the communication quality is scarcely varied. Thus, the correspondence relation is prepared for each propagation environment. The mobile station 1 judges the current propagation environment by receiving the location information from the base station 2, and the TPC_slope control part 100 controls TPC_slope based on the correspondence relation for the current propagation environment. The current propagation environment maybe judged from the average value of BLER variations for a certain period in the past.

Also, TPC_slope may be controlled, employing a different correspondence relation depending on whether M-BLER is lower or higher than T-BLER. By preparing such a correspondence relation that TPC_slope is controlled to be a greater value when M-BLER is higher than T-BLER than when M-BLER is lower than T-BLER, the transmitter power of the base station 2 can be increased greatly when M-BLER is higher than T-BLER, or gently decreased when M-BLER is lower than T-BLER.

Also, the TPC_slope control part 100 may set TPC_slope to "1" unconditionally, for example, without variably controlling TPC_slope according to ΔBLER, when ΔBLER is greater than a predetermined threshold consecutively a certain number of times. Thereby, it is possible to suppress excessive variations in the transmitter power of the base station 2.

Though SIR is employed as the basis of the inner loop power control, the reception power may be employed. Though BLER is employed as the basis of the outer loop power control, BER (Bit Error Rate) may be employed.

As described above, in the first embodiment of the invention, the transmitter power adjustment width is variably controlled based on ΔSIR, and TPC_slope is variably controlled based on ΔBLER. Accordingly, even if ΔSIR is invariant regardless of whether ΔBLER is large or small, the transmitter power adjustment width when ΔBLER is large may be greater than the transmitter power adjustment width when ΔBLER is small, whereby the transmitter power control is made at higher precision.

In the first embodiment of the invention, since the correspondence relation between ΔBLER and TPC_slope is prepared for each device type of the mobile station or each propagation environment, TPC_slope can be set in consideration of the device type of the mobile station or the propagation environment, whereby the transmitter power control is made at higher precision.

A second embodiment of the invention will be described below. The second embodiment of the invention regards the operation of the Target-SIR control part 90 in FIG. 2, and other portions are the same as in the first embodiment already described.

In the first embodiment of the invention, the Target-SIR control part 90 increases or decreases T-SIR by a predetermined value, based on the result of comparison between M-BLER and T-BLER. On the other hand, in the second embodiment of the invention, the Target-SIR control part 90 variably controls the adjustment width of T-SIR based on a difference (ΔBLER) between M-BLER and T-BLER, and increases or decreases T-SIR by the adjustment width. That is, the Target-SIR control part 90 calculates the adjustment width of T-SIR by multiplying ΔBLER by a predetermined factor, like the method of generating TPC_cmd (formula (2)) in the inner loop power control part.

Accordingly, T-SIR is set invariable width at several stages based on a variation situation of the communication quality in the second embodiment of the invention, unlike the fixed width adjustment in which T-SIR is increased by a predetermined value if M-BLER is higher than T-BLER or T-SIR is decreased by the predetermined value if M-BLER is smaller than T-BLER. For example, M-BLER is greater than T-BLER and ΔBLER is increased double, the increased amount of T-SIR may be doubled.

Though the transmitter power control method in the first and second embodiments of the invention has been described above employing the down-link as an example, the invention may be of course applied to the transmitter power control of the up-link. That is, the base station 2 has the same configuration as the mobile station 1 as shown in FIG. 2, and operates in accordance with the flowchart of FIG. 3, whereby the transmitter power control method in the first and second embodiments of the invention may be also applied to the up-link.

Of course, the processing operation in accordance with the flowchart of FIG. 3 may be implemented by enabling a computer with a CPU (control unit) to read and perform a program stored in a storage medium such as ROM.

**Claims**

1. A radio communication apparatus for generating the transmitter power control information based on a received signal from the other station and transmitting said transmitter power control information to said other station, comprising:

    transmitter power control information generation means for generating said transmitter power control information by varying a transmitter power adjustment width of transmitter power at said other station in accordance with a difference between the receiving environment of the apparatus measured based on said received signal and its target value; and
    factor control means for variably controlling a factor, which is used when said transmitter power control information generation means variably controls said transmitter power adjustment width in accordance with the difference between said receiving environment and its target value, in accordance with a difference between the received signal quality and its target value.

2. The radio communication apparatus according to claim 1, further comprising target value control means for variably controlling the adjustment width in the target value of said receiving environment in accordance with the difference between the received signal quality and its target value to change the target value of said receiving environment by the adjustment width.

3. The radio communication apparatus according to claim 1, wherein said factor control means has a correspondence relation between the difference between the received signal quality and its target value and the value of said factor, for each propagation environment of the apparatus, and variably controls said factor based on said correspondence relation for the current propagation environment of the apparatus.

4. The radio communication apparatus according to claim 3, wherein said radio communication apparatus is a mobile station, and said factor control means selects said correspondence relation for the current propagation environment of the apparatus, based on location information obtained from a base station of the other station.

5. The radio communication apparatus according to claim 3, wherein said factor control means selects said correspondence relation for the current propagation environment of the apparatus, based on the received signal quality for a predetermined period in the past.

**6.** The radio communication apparatus according to claim 1, wherein said factor control means has a correspondence relation between the difference between the received signal quality and its target value and the value of said factor to be used when the received signal quality is lower than its target value, and that to be used when the received signal quality is higher than its target value, and variably controls said factor, based on said correspondence relation corresponding to the result of comparison between the received signal quality and its target value.

**7.** The radio communication apparatus according to claim 1, wherein said factor control means suppresses the variable control for said factor, if the difference between the received signal quality and its target value is larger than a predetermined threshold consecutively a predetermined number of times.

**8.** The radio communication apparatus according to claim 1, wherein the bit string of said transmitter power control information generated by said transmitter power control information generation means is divided into two groups, one of the groups being a bit sting consisting of '0" or "1" that is the information instructing said other station to increase or decrease the transmitter power, and the other group being the information indicating said transmitter power adjustment width.

**9.** The radio communication apparatus according to claim 1, wherein said receiving environment is SIR (Signal to Interference Ratio), and said received signal quality is BLER (Block Error Rate).

**10.** A transmitter power control method for a radio communication apparatus for generating the transmitter power control information based on a received signal from the other station and transmitting said transmitter power control information to said other station, comprising:

a transmitter power control information generation step of generating said transmitter power control information by varying a transmitter power adjustment width of transmitter power at said other station in accordance with a difference between the receiving environment of the apparatus measured based on said received signal and its target value; and
a factor control step of variably controlling a factor, which is used at said transmitter power control information generation step in variably controlling said transmitter power adjustment width in accordance with the difference between said receiving environment and its target value, in accordance with a difference between the received signal quality and its target value.

**11.** The transmitter power control method according to claim 10, further comprising a target value control step of variably controlling the adjustment width in the target value of said receiving environment in accordance with the difference between the received signal quality and its target value to change the target value of said receiving environment by the adjustment width.

**12.** The transmitter power control method according to claim 10, wherein said radio communication apparatus has a correspondence relation between the difference between the received signal quality and its target value and the value of said factor, for each propagation environment of the apparatus, and said factor control step comprises variably controlling said factor based on said correspondence relation for the current propagation environment of the apparatus.

**13.** The transmitter power control method according to claim 12, wherein said radio communication apparatus is amobile station, and said factor control step comprises selecting said correspondence relation for the current propagation environment of the apparatus, based on location information obtained from a base station of the other station.

**14.** The transmitter power control method according to claim 12, wherein said factor control step comprises selecting said correspondence relation for the current propagation environment of the apparatus, based on the received signal quality for a predetermined period in the past.

**15.** The transmitter power control method according to claim 10, wherein said radio communication apparatus has a correspondence relation between the difference between the received signal quality and its target value and the value of said factor to be used when the received signal quality is lower than its target value, and that to be used when the received signal quality is higher than its target value, and said factor control step comprises variably controlling said factor, based on said correspondence relation corresponding to the result of comparison between the received signal quality and its target value.

**16.** The transmitter power control method according to claim 10, wherein said factor control step comprises suppressing the variable control for said factor, if the difference between the received signal quality and its target value is larger than a predetermined threshold consecutively a predetermined number of times.

**17.** The transmitter power control method according to claim 10, wherein the bit string of said transmitter power control information generated at said transmitter power control information generation step is divided into two groups, one of the groups being a bit sting consisting of "0" or "1" that is the information instructing said other station to increase or decrease the transmitter power, and the other group being the information indicating said transmitter power adjustment width.

**18.** The transmitter power control method according to claim 10, wherein said receiving environment is SIR (Signal to Interference Ratio), and said received signal quality is BLER (Block Error Rate).

**19.** A program for enabling a computer to perform a transmitter power control method for a radio communication apparatus for generating the transmitter power control information based on a received signal from the other station and transmitting said transmitter power control information to said other station, comprising:

a transmitter power control information generation step of generating said transmitter power control information by varying a transmitter power adjustment width of transmitter power at said other station in accordance with a difference between the receiving environment of the apparatus measured based on said received signal and its target value; and
a factor control step of variably controlling a factor, which is used at said transmitter power control information generation step in variably controlling said transmitter power adjustment width in accordance with the difference between said receiving environment and its target value, in accordance with a difference between the received signal quality and its target value.

**20.** The program according to claim 19, further comprising a target value control step of variably controlling the adjustment width in the target value of said receiving environment in accordance with the difference between the received signal quality and its target value to change the target value of said receiving environment by the adjustment width.

**21.** The program according to claim 19, wherein said receiving environment is SIR (Signal to Interference Ratio), and said received signal quality is BLER (Block Error Rate).

# FIG. 1

## FIG. 2

# FIG. 3

```
OPERATION OF                              OPERATION OF
INNER - LOOP                              OUTER - LOOP

    |                                         |        S5
    v                                         v
CALCULATE        S1                       CALCULATE
M - SIR                                    M - BLER

    |                                         |        S6
    v        S2            S8                 v
CALCULATE    <------  NOTIFY T - SIR  <--- CALCULATE
△SIR                  TO INNER - LOOP       T - SIR FROM
                                            △BLER

    |                                         |        S7
    v        S3                               v
DECIDE                 NOTIFY              CALCULATE
TRANSMITTER   <------  TPC_SLOPE   <------ TPC_SLOPE
POWER                  TO INNER - LOOP     FROM △BLER
ADJUSTMENT
VALUE WITH
△SIR × TPC_SLOPE,
AND GENERATE
TPC BITS
                          S9
    |
    v        S4
TRANSMIT TPC
BITS
```

13

# FIG. 4

| TPC BIT PATTERN | | | TRANSMITTER POWER CONTROL COMMAND |
|---|---|---|---|
| $N_{TPC} = 2$ | $N_{TPC} = 4$ | $N_{TPC} = 8$ | |
| — | 1111 | 11111111 | 4 |
| — | 1110 | 11111101 | 3 |
| 11 | 1100 | 11110101 | 2 |
| 10 | 1000 | 11010101 | 1 |
| 01 | 0111 | 01111111 | - 1 |
| 00 | 0011 | 01011111 | - 2 |
| — | 0001 | 01010111 | - 3 |
| — | 0000 | 00000000 | - 4 |

# FIG. 5

| TPC BIT PATTERN | | | TRANSMITTER POWER CONTROL COMMAND |
|---|---|---|---|
| $N_{TPC} = 2$ | $N_{TPC} = 4$ | $N_{TPC} = 8$ | |
| — | 1111 | 11111111 | 4 |
| — | 1100 | 11110000 | 3 |
| 11 | 1110 | 11111100 | 2 |
| 10 | 1101 | 11110011 | 1 |
| 01 | 0001 | 00000011 | - 1 |
| 00 | 0010 | 00001100 | - 2 |
| — | 0011 | 00001111 | - 3 |
| — | 0000 | 00000000 | - 4 |

# FIG. 6

| Δ BLER | TPC_SLOPE |
|---------|-----------|
| 0 ~ 10% | 1 |
| 10 ~ 50% | 2 |
| 50 ~ 100% | 3 |

# FIG. 7

## PRIOR ART

| TPC BIT PATTERN | | | TRANSMITTER POWER CONTROL COMMAND |
|---|---|---|---|
| $N_{TPC} = 2$ | $N_{TPC} = 4$ | $N_{TPC} = 8$ | |
| 11 | 1111 | 11111111 | 1 |
| 00 | 0000 | 00000000 | 0 |